(19) **Europäisches Patentamt / European Patent Office / Office européen des brevets**

(11) **EP 1 830 557 A1**

(12) **EUROPEAN PATENT APPLICATION**

(43) Date of publication:
**05.09.2007 Bulletin 2007/36**

(51) Int Cl.:
**H04N 1/60** (2006.01)

(21) Application number: **06110556.5**

(22) Date of filing: **01.03.2006**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU** | • **Verbeeck, Francis**<br>**c/o Agfa-Graphics NV**<br>**2640, Mortsel (BE)** |
| (71) Applicant: **Agfa Graphics N.V.**<br>**2640 Mortsel (BE)** | (74) Representative: **Goedeweeck, Rudi et al**<br>**Agfa Graphics N.V.**<br>**IP Department 3622**<br>**Septestraat 27**<br>**2640 Mortsel (BE)** |
| (72) Inventors:<br>• **Mahy, Marc François**<br>**c/oAgfa Graphics NV**<br>**2640, Mortsel (BE)** | <u>Remarks:</u><br>Amended claims in accordance with Rule 86 (2) EPC. |

(54) **Method and apparatus for printer characterization**

(57) A one dimensional transformation of colorant values before transforming them into a color using a printer model enables to linearize the gradation of each color component as a function of colorant values. The method reduces interpolation error if the printer model uses piecewise linear interpolation. Both a method and a system are described.

FIG. 10

**Description**

FIELD OF THE INVENTION

The present invention relates to an image processing method for rendering color images on a printer. More specifically, the invention relates to an improved mathematical printer model that relates color to colorant values for said printer.

BACKGROUND OF THE INVENTION

Color printing systems generally rely on subtractive color mixing of a set of colorants to render different colors. A set of colorants that is widely used comprises cyan, magenta, yellow and black colorants.

A color separation process separates a color in a digital document into a set of colorant magnitudes that, when printed on top of each other, yield a faithful rendering of said color. A color separation process is usually based on inverting a mathematical printer model that expresses color as a function of printed colorant amounts.

The coefficients of a mathematical printer model are usually obtained by printing and measuring a printer target of which the colorant values are specified. By printing the target and measuring the colors of the patches, the relation between colorant amount and the resulting color is known for the colorant combinations of the patches. A typical standard four colorant printer target comprises colorant combinations having magnitudes of 0%, 10%, 20%, 40%, 70% and 100%.

The printer model uses an interpolation technique to predict the colors for other colorant combinations. For example a tetrahedral interpolation technique can be used as presented in the article by Francis Schmitt and Jon Yngve Hardeberg, "Color Printer Characterization Using a Computational Geometry Approach", Proceedings of IS&T and SID's 5th Color Imaging Conference, Pages 96-99, Scottsdale, Arizona, November 1997.

Short and long term variations of a printer are managed by calibrating said printer. The aim of calibration is to bring a printer into a standardized condition, for example corresponding to a reference printer.

A typical calibration method involves printing with each single colorant a stepped tone wedge and measuring the density of the patches. The density measurements are used to calculate a calibration curve that yields a desired relation between the magnitude of a single colorant and the printed density.

One problem with a state of the art printer model is interpolation error.

Take for example a printer model that predicts the CIE L\*a\*b\* color values as a function of cyan, magenta, yellow and black colorants between 0% and 100%. If the above tetrahedral interpolation is used, such a printer model will yield exact predictions for colorant combinations that occur in the printer target. For other colorant combinations, the model will predict the color as a weighted average of the colors of the vertices of a tetrahedron to which said colorant combination belongs.

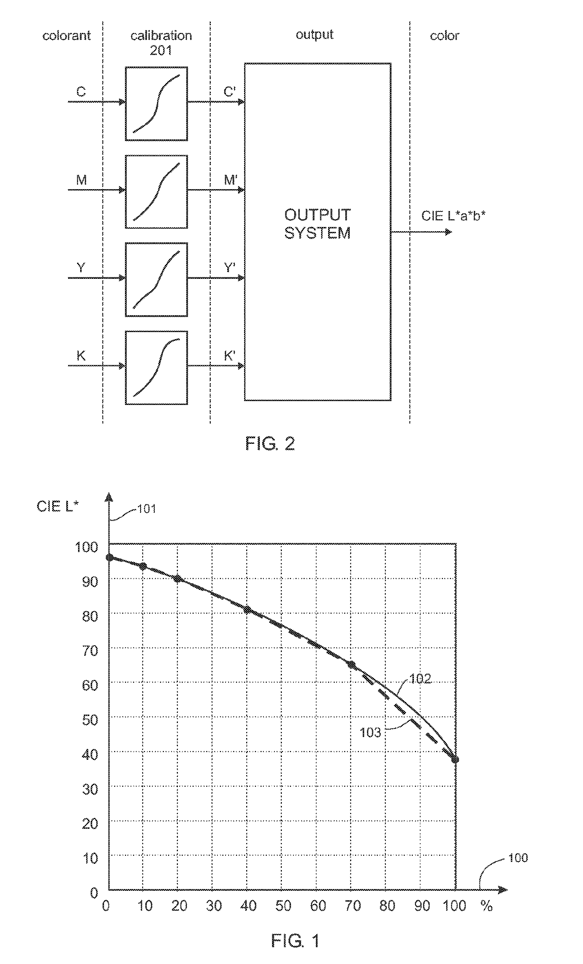

For a single colorant, said tetrahedral interpolation degenerates to piecewise linear interpolation. Figure 1 shows the CIE L\* value 101 as a function of the magnitude 100 of a magenta colorant ranging from 0% to 100% as printed and measured (solid line 102) and as predicted by a piecewise linear model (dotted line 103). As Figure 1 shows, the difference between the measured and the interpolated values is quite small for magnitudes of the magenta colorant between 0% and 70%, but it becomes slightly larger for the colorant magnitudes between 70% and 100%.

The document EP-A-1 083 739 teaches that the relation between a colorant magnitude and at least one dimension of the resulting color is preferably substantially uniform on a psychovisual scale.

A first reason for this is that such an approach minimizes the visibility of quantization noise that results from quantizing a colorant value with a limited number - say eight - bits.

A second advantage is that it results in a reduction of interpolation error.

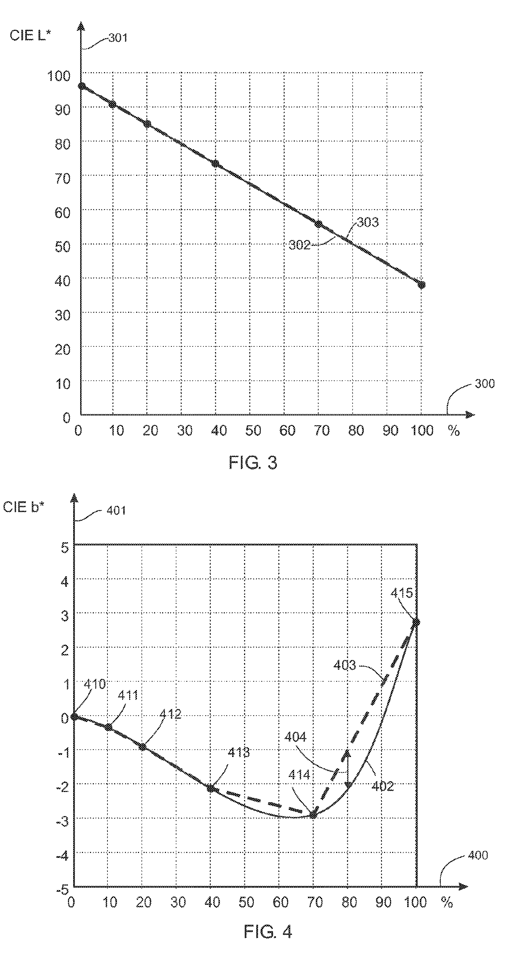

Referring to Figure 2, a printer has been calibrated in a calibration stage 201 so that the printed and measured CIE L\* color component of a printed magenta colorant is a linear function of the colorant magnitude. Referring to Figure 3, such a calibration technique results in zero interpolation error for the CIE L\* value, since the measured (solid line) 302 and the piecewise linear interpolation (dotted line) 303 curves coincide.

The same, however, is not necessarily the case for the interpolation error of another color component. Figure 4 shows the CIE b\* value for magnitudes 401 of a magenta colorant ranging from 0% to 100% as printed and measured (solid line) 402 and as predicted by a piecewise linear model (dotted line) 403, whereby the printer was calibrated for linearity between the colorant magnitude and the CIE L\* color component. Referring to Figure 4, a substantial interpolation error 404 exists between the printed and measured CIE b\* color component magnitude and the CIE b\* color component as predicted by a piecewise linear interpolation printer model in the range between 70% and 100% colorant magnitude.

As the document EP-A-1 083 739 teaches, it may be advantageous for some colorants not to use the CIE L\* for linearization purposes. A yellow colorant, for example is advantageously calibrated by linearizing the CIE b\* color component.

One solution available to a person skilled in the art to overcome the above problem is to reduce interpolation error by using a printer target that contains more patches. For example, one could use combinations of ten instead of six colorant values. While this method is very effective, it increases the number of patches that need to be printed and measured. This is undesirable, as it involves more time, more processing and more risk of mistakes that result in error. Furthermore, this approach involves using a non-standardized printer target.

Another solution available to a person skilled in the art comprises using a non-linear interpolation technique, such as for example a cubic spline interpolation instead of the localized Neugebauer equations or the tetrahedral interpolation. While this solution is also effective, it is computationally more complex and more demanding than said aforementioned state of the art piece wise linear interpolation techniques.

From this follows that a need exists for an improved printer model that is computationally efficient, that uses a standardized printer target and that minimizes interpolation error.

SUMMARY OF THE INVENTION

According to the invention, an output device model is split into partial output device models, whereby each partial output device model predicts one single color component as a function of colorant magnitudes. By applying a separate set of one-dimensional transformations of the colorant magnitudes for each partial output device model, the relation between the colorant magnitudes and the color components can be made linear for all the color components.

The above-mentioned advantageous effects are realized by a method having the specific features set out in claim 1. Specific features for preferred embodiments of the invention are set out in the dependent claims. Further advantages and embodiments of the present invention will become apparent from the following description and drawings.

BRIEF DESCRIPTION OF THE DRAWINGS

Figure 1 shows CIE L* color component in response to a magenta colorant magnitude ranging from 0% to 100% using no calibration.

Figure 2 shows an output system comprising a calibration stage.

Figure 3 shows CIE L* color component in response to a magenta colorant magnitude ranging from 0% to 100% using a prior art calibration method.

Figure 4 shows CIE b* color component in response to a magenta colorant magnitude ranging from 0% to 100% using a prior art calibration method.

Figure 5 shows an output system comprising hardware and software peripherals.

Figure 6 shows a detail of an output system comprising a gradation calibration stage and a dynamic range mapping stage.

Figure 7 shows an example of output device target.

Figure 8-A to Figure 8-H support the explanation on tetrahedral interpolation in the text.

Figure 9 shows an output device model for transforming a colorant vector having colorant components into a color having color components.

Figure 10 shows a system according to a preferred embodiment of the current invention.

Figure 11 shows the CIE b* gradation for magenta colorant magnitude variations between 70% and 100% and also a reference gradation.

Figure 12 shows a one-dimensional transformation that linearizes the CIE b* response as a function of magenta colorant magnitude variations between 70% and 100%.

Figure 13 shows how the current invention reduces interpolation error in a system that uses piecewise linear interpolation.

## DETAILED DESCRIPTION OF THE INVENTION

### color and color space

The *color* of an object refers to the way the electromagnetic spectrum that it radiates is perceived by a human observer.

A color can be represented by a *color vector* comprising components of which the magnitudes correspond with the energy magnitudes of a set of primary colors that - when additively mixed - yield visually the same impression to said observer as said color.

It has been demonstrated that a vector having three components is sufficient to represent a color in a unique way to a standard observer. In that case the color space is three-dimensional.

The three components can correspond to a set of three real primaries, such as a red, green and blue primary, or a set of three virtual primaries such as the CIE XYZ primaries. A characteristic of the CIE XYZ set of primaries is that they correspond with the integrated responses as measured through a set of three spectral filters that are linear combinations of the receptor responses of human visual system of a standard observer.

Another approach uses a transformation of the coordinates in said CIE XYZ primary system to yield a locally psychovisually uniform color space. This document will mainly deal with the locally psychovisually uniform color space CIE L*a*b* to represent colors, although other color spaces can also be used for the invention.

More information on the subject of color spaces is found in the publication "Color Science: concepts and methods, quantitative data and formulae" (2nd ed.) by Wyszecki G. & Stiles W. S. published in 1982 Wiley (New York).

Color appearance models are designed to take into effect the observation that the psychovisual appearance of a color stimulus may be affected by the presence of other visual stimuli. An example of such a color appearance model is the CIECAM02 color space, which expresses colors in terms of three dimensions having a semantic interpretation such as lightness, hue and saturation.

Color spaces are also referred to as *device independent spaces.*

### colorant, substrate and colorant space

A *colorant* shall mean a substance that induces a color or modifies the hue of something else by absorbing, reflecting or emitting visible light. The absorption, reflection or emission can be spectrally flat, or it can be spectrally selective.

A colorant can be a conventional pigmented or dyed ink or colorant, but it can also be wax, a water repellent substance, an adhesive or a plastic. Usually a colorant is not a pure compound, but a complex mixture comprising several components such as dyes, pigments, surfactants, binders, fillers, solvents, water and dispersants, each component serving a specific function. The colorant could also be a material of which the viscosity or phase changes with temperature, such as a wax. Specifically mentioned also are colorants that polymerize, for example under influence of electromagnetic radiation such as UV light. This process is called curing.

A *colorant magnitude* shall represent an amount of light absorption, reflection or emission. A colorant magnitude can be represented on a scale from 0% to 100%, for example to represent a magnitude of said colorant that ranges from minimum absorption on a substrate to maximum absorption. A colorant magnitude can also be represented using an eight bit word on a scale from 0 to 255, for example corresponding with a range from minimum to maximum emission in the case of a display system. Other possibilities also exist, e.g. colorant magnitudes represented on a 1 bit, a 12 bit or a 16 bit scale.

In this document, colorants having the same hue shall mean that they share the same primary absorption peak as measured by a graphic arts densitometer, such as for example the X-Rite model 530.

In the case of neutral colorants, colorants having the same hue shall mean colorants that have a CIE a* and CIE b* value of which:

$$(\text{CIE } a*)*(\text{CIE } a*) + (\text{CIE } b*)*(\text{CIE } b*) < 16$$

when said colorants are separately printed on a substrate using the print levels that produce the maximum density on said substrate.

Colorants having the same hue can have the same densities, but preferably have different densities. For example, a first cyan colorant can have a density that is lower than the density of a second cyan colorant.

A *colorant vector* is a vector of which the components are colorant magnitudes. A colorant vector can be represented in a *colorant space* of which the dimensions correspond with the colorant magnitudes.

A *substrate* could be paper, but it could also be textile, a synthetic foil or a metal plate on which colorant is laid down by an output device.

pixel and image

A *pixel* is a two-dimensional spatial unit to which a color or colorant vector is associated.

An *image* is a spatial two-dimensional arrangement of pixels. Within the scope of this document, an image shall also comprise a sequence of temporally related images, for example for rendering motion pictures or television images. Also comprised are compressed images, i.e. images on which signal processing techniques have been applied to reduce pixel and coding redundancies.

output device

An *output device* shall mean a hardware device that is capable to render images. In this document, *rendering and printing* shall both refer to the process of rendering an image on an output device, whatever its nature. In this document, the rendering of color by an output device or system shall be referred to as a rendering process, or - in short - a process.

Output devices comprise display and printing devices. Examples of display devices comprise CRT's, LCD's, plasma and projection displays. Most of these devices can render both static and motion pictures. Examples of printing technologies comprise printers for photographic paper, electro-photographic printers, thermal transfer printers, dye sublimation printers, ink jet printers, offset printers, gravure printers and flexographic printers.

An output device can be monochrome or color, depending on its capabilities to render monochrome or color images. A device that is capable to independently vary for each pixel the magnitude of n distinct colorants is said to have an *n-dimensional colorant space,* wherein each dimension corresponds with one of said colorants. Such a device is capable to print a pixel having an n-dimensional colorant vector.

Take for example an offset printing press. Most offset presses are operated using cyan (C), magenta (M), yellow (Y) and black (K) inking stations. The number of colorants and hence the dimensionality of the colorant space is four.

The colorant space that is associated with an output device is sometimes referred to as a *device dependent colorant space,* wherein said device refers to the output device.

The *colorant gamut* of an output device corresponds with all possible combinations of colorant magnitudes that said output device is capable to render.

In absence of any limitations on colorant combinations, the colorant gamut associated with a process having an n-dimensional color space is an *n-dimensional cube.* In most practical situations not all possible colorant combinations are acceptable for rendering. Such a limitation on combining different colorant magnitudes reduces the colorant gamut.

output system

An output system is a system that comprises an output device, but typically also software and hardware peripherals to operate said device, such as printer drivers, color correction and digital halftoning software and the systems they run on.

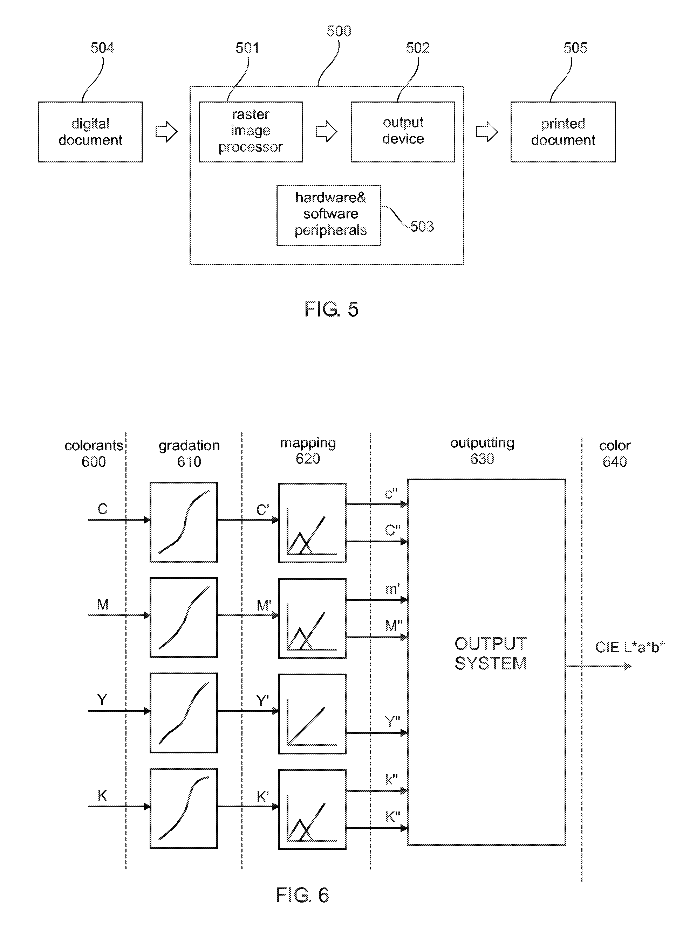

Figure 5 shows a system according to the current invention. The input of a system is a digital document 504 that is to be converted in a printed document 505.

Usually this document 504 is represented in a device independent format such as for example TIFF, PDF®, MS-Word®, or PostScript®.

The system comprises a raster image processor 501 to transform the digital document 504 into a raster image having a spatial and tonal resolution and a colorant space.

According to a preferred embodiment, the raster image processor uses a computer program such as for example "Adobe PostScript Printer Driver" commercialized by the company Adobe Systems Incorporated, located in San Jose CA. The raster image processor also comprises a color management system to separate a color vector of an object in a digital input document into a colorant vector represented in said colorant space.

The data from the raster image processor is sent to an output device 502 for producing the printed document 505.

The raster image processor 501 and the output device 502 are supported by peripheral hardware and software 503. The raster image processor program preferably runs on a data processing system. The output device 502 comprises an output device controller to manage the functions of said device.

Referring to Figure 6, a colorant channel refers to the image processing and rendering chain that is related to one single colorant.

In the system shown in Figure 6, the conversion of a set of colorant magnitudes (C,M,Y,K) involves preferably first a gradation calibration stage 610 to obtain gradation corrected colorant magnitudes (C',M',Y',K'), followed by mapping stage 620 to obtain mapped colorant magnitudes (c",C",m",M",Y",k",K"), followed by an outputting stage 630 to obtain a rendered image. The purpose of the mapping stage is to split, for example, a global cyan colorant magnitude C' into a combination of a first partial cyan colorant magnitude c", and a second partial cyan colorant magnitude C", wherein c" C" are colorants having substantially the same hue but different densities.

output device target

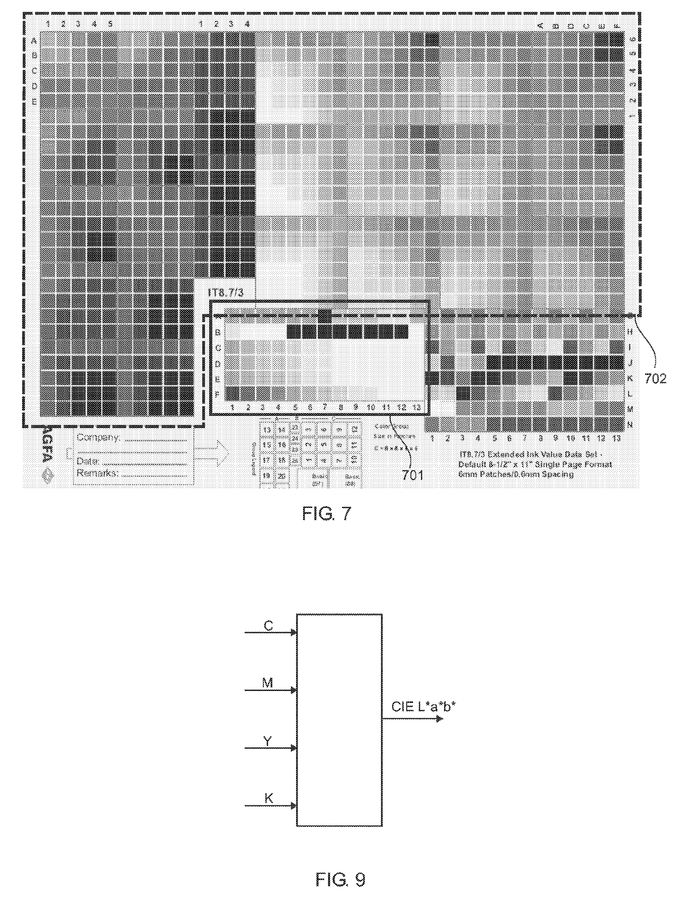

An example of an output device target is the IS12642 target (formerly called ANSI IT 8.7/3) shown in Figure 7. This target contains a sub-set 702 of combinations of six cyan, magenta and yellow and black colorant magnitudes (0%, 10%, 20%, 40%, 70% and 100%) .

Preferably the patches of an output device target are combinations of a set of sampling points along the different dimensions in colorant space. By making all the possible combinations of said sampling points, an ordered grid of points in colorant space is defined. In the remaining of this document, they are referred to as the "grid points".

The output device target in Figure 7 also comprises step wedges 701 of the pure colorants having colorant magnitudes (0%, 3%, 7%, 10%, 15%, 20%, 25% 30%, 40%, 50%, 60%, 70%, 80%, 90% and 100%). These step wedges are commonly used to calibrate an output system. Preferably, the step wedges 701 have a finer granularity on the colorant magnitude scale than the sampling of colorant magnitudes for the sub-set 702 in the output device target.

The output device target is measured, preferably using a colorimeter, such the X-Rite 962 0°/45° Portable Spectrophotometer. Other measurement devices are specifically mentioned, including an automatic measurement table and a data processing system to manage such a table and acquiring, storing and processing the measurement data. If no spectrophotometer is available, a color densitometer can also be used, but this solution is not preferable.

In one embodiment an output device target comprises all the points of said ordered grid. In this document, such an output device target is referred to as "complete". In another embodiment an output device target comprises only a subset of points of said ordered grid. In this document such a target is referred to as "incomplete". The document EP-A-1 146 726 teaches that it is possible to print and measure an incomplete output device target and to use the color vectors of the grid points of said incomplete output device target to derive color vectors for grid points that belong to a complete output device target.

calibration of an output system

In this document a gradation shall mean any scalar entity, physical or virtual, that varies in response to a colorant variation. Typically the scalar entity is a density (measured through a neutral filter or a red, green or blue filter) or a color component such the CIE L* component or a CIE a* or CIE b* component. The entity can also be a colorant magnitude itself, for example it can be a corrected or transformed colorant magnitude.

According to one aspect of the invention, an output device target is preferably first calibrated before an output device target is printed. Calibration involves normalizing for each colorant separately the relation between the magnitude of said colorant and the resulting color to a predefined reference gradation, which is, for example, the gradation of a reference printer

For example, an output device can be calibrated so that the printed density of colorant as measured with a graphic arts scanner such as the X-Rite 938 varies proportionally with the magnitude of said colorant. Alternatively the calibration can be such that the density varies according to a predefined curve.

Referring to Figure 6, the calibration of an output device is preferably obtained by transforming a first colorant magnitude (C, M, Y, K) into a second colorant magnitude (C', M', Y', K') so that when said second global colorant magnitude is output, it results in the desired density. The transformation can be implemented in a separate look-up-table step prior to digital halftoning and printing or it can preferably be combined with the mapping curves and be incorporated in the digital halftoning step itself as explained in EP-B-0639 023 to reduce the loss quantization levels.

The document EP-A-1 083 739 teaches that a calibration step preferably results in a linear relation between the colorant magnitude and a psychovisually uniform dimension of the resulting color, such as for example the CIE L* component. As the document explains, this approach minimizes the visual quantization noise that results from quantizing a colorant magnitude with a limited number of - say eight - bits.

output device model and interpolation

An *output device model* is a mathematical function that expresses what color vector results from printing a colorant vector on an output system.

According to the current invention, an output device model is preferably a continuous function.

An n-dimensional rendering process is characterized if:

- its output device model is defined
- its colorant gamut is defined (specifically including colorant limitations)

The coefficients of an output device model are preferably determined using an *output device target.* By printing said target, and measuring the color of said patches, a relation between colorant vectors and the resulting color vectors can be determined.

According to one aspect of the current invention, a printer model uses an interpolation technique to predict a color vector as a function of a colorant vector for colorant vectors that are not part of the said ordered grid of points in colorant space.

A first example of an interpolation technique uses interpolating polynomials to express color component magnitudes as a function of colorant component magnitudes. The coefficients of such a polynomial are for example determined by minimizing the deviation between the measured and predicted responses for the grid using a linear regression technique.

A second example of an interpolation technique are the "localized Neugebauer equations" as explained in the article by Marc Mahy and Paul Delabastita, "Inversion of the Neugebauer Equations," Color Research and Application, Vol. 21, No 6, pp. 404-411.

A third example of a preferred interpolation technique is a tetrahedral interpolation technique as explained in the article by Francis Schmitt and Jon Yngve Hardeberg, "Color Printer Characterization Using a Computational Geometry Approach", Proceedings of IS&T and SID's 5th Color Imaging Conference, Pages 96-99, Scottsdale, Arizona, November 1997.

The second and third interpolation techniques are based on:

- subdividing the n-dimensional colorant space into a contiguous set of n-dimensional polyhedrons of which the vertices correspond to grid points.
- determining to which polyhedron a given colorant vector belongs;
- and using linear interpolation between the color vectors corresponding to vertices of said polyhedron to predict a color vector corresponding to said colorant vector.

In the case of the Neugebauer equations, the polyhedrons are n-dimensional hypercubes; in the case of the tetrahedral interpolation the polyhedrons are n-dimensional simplexes.

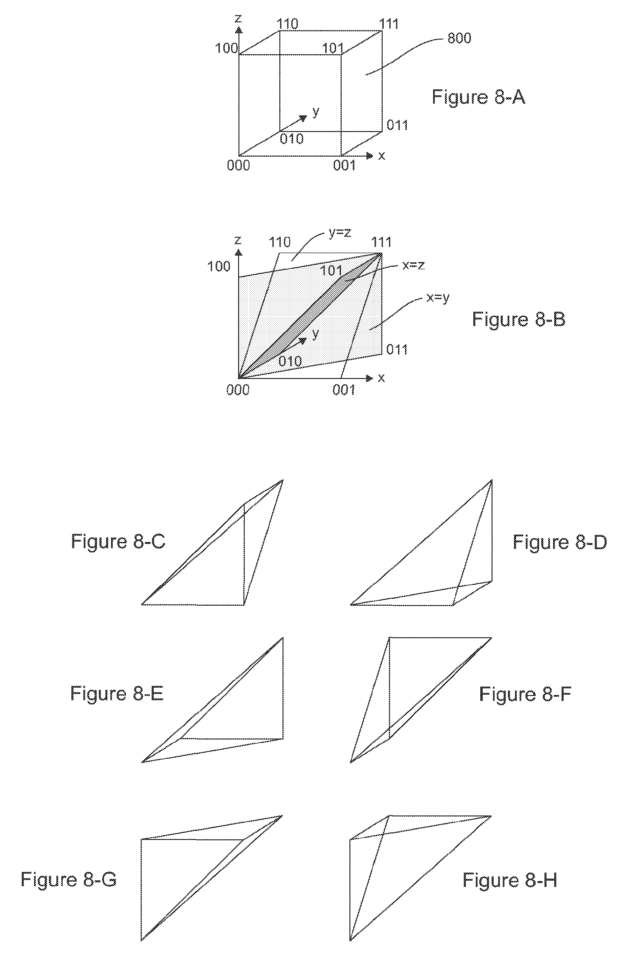

Figure 8-A gives an example of a tetrahedral interpolation technique for system having x,y and z colorants. The vertices 000,001,010,011,100,101,110 and 111 define a parallelepiped in the three colorant space. Each vertex corresponds with a colorant vector of which the color is known, for example based on the measurements of an output device target.

Referring to Figure 8-B, the three planes x=y, y=z and x=z are diagonal planes. Each plane divides the colorant space into two half-spaces. Together these three planes divide said three-dimensional colorant cube 800 into 6 tetrahedron subspaces Figure 8-C to Figure 8-H. Each tetrahedron is a three-dimensional simplex having four vertices. Tetrahedral interpolation for a colorant vector involves:

1) determining for a colorant in the three-dimensional colorant space to which tetrahedron subspace it belongs by determining for each of the planes x=y, x=z and x=z to which subspace said colorant vector belongs;
2) linear interpolating between the colors c(v1), c(v2), c(v3) and c(v4) of the vertices v1, v2, v3 and v4 of said tetrahedron.

The two above interpolation techniques (Neugebauer and tetrahedron) share the property that they predict a color vector exactly for colorant vectors that correspond with grid points of the printer target and that they degenerate into piecewise linear interpolation between the sampling points of the target along the colorant dimensions of the colorant space. The tetrahedral interpolation has an additional property that it degenerates into piecewise linear interpolation between the sampling points of the target along the diagonals of the ordered grid in colorant space.

Mathematical description of a tetrahedral interpolation for a 3-colorant process

Let a finite set $\{w_i\} \subset W^3$ of points $w_i, i=1,...,N,$ inside the colorants cube $W^3$ be a regular mesh. Consider a discrete map $f: \{w_i\} \rightarrow \{p_i\}$ of measurement data, where $p_i = f(w_i) = F(w_i)$ for $i=1,...,N$.

To approximate the given discrete map $f$ by a continuous map $F: W^3 \rightarrow R^3$, piecewise linear interpolation is used.

By definition of a regular mesh, for $k=1,2,3$ there exists the one-dimensional meshes $Z^k = \{x^k_0, ..., x^k_{N(k)}\}$, with $a^k = x^k_0 < ... < x^k_{N(k)}, = b^k$, of $N(k)+1$ real numbers such that $\{w_i\} = Z^1 \times Z^2 \times Z^3 \subset W^3$ and $N = (N(1)+1)\ (N(2)+1)\ (N(3)+1)$.

It means that the three-dimensional colorants cube $W^3$ can be decomposed into the union

$$W^3 = \bigcup \Pi_{i,j,k}$$

$$i=1,\dots,N(1).\ j=1,\dots,N(2).\ k=1,\dots,N(3)$$

of the mesh parallelepiped cells $\Pi_{i,j,k} = [x^1_{i-1}, x^1_i] \times [x^2_{j-1}, x^2_j] \times [x^3_{k-1}, x^3_k]$, $i=1,...,N(1)$, $j=1,...,N(2)$, $k=1,...,N(3)$. Inside each of these parallelepiped cells the continuous approximation F of the measurement discrete map f is constructed by the following way.

Consider an arbitrary three-dimensional rectangular parallelepiped $\Pi = [a^1, b^1] \times [a^2, b^2] \times [a^3, b^3] = \{(x^1, x^2, x^3), a^1 \leq x^1 \leq b^1, a^2 \leq x^2 \leq b^2, a^3 \leq x^3 \leq b^3\}$, where $a^1, b^1, a^2, b^2, a^3$, and $b^3$ are fixed real numbers. There is an obvious one-to-one correspondence of the 8 vertices to the rectangular parallelepiped $\Pi$ and the 8 vertices $(0,0,0)$, $(0,0,1)$, $(0,1,0)$, $(0,1,1)$, $(1,0,0)$, $(1,0,1)$, $(1,1,0)$, $(1,1,1)$ to the unit three-dimensional cube $\Pi_1 = \{(x^1, x^2, x^3), 0 \leq x^1 \leq 1, 0 \leq x^2 \leq 1, 0 \leq x^3 \leq 1\}$.

Numerate all the 8 vertices of the rectangular parallelepiped $\Pi$ by means of the corresponding vertices of the unit cube $\Pi_1$, $x_{000}$, $x_{001}$, $x_{010}$, $x_{011}$, $x_{100}$, $x_{101}$, $x_{110}$, $x_{111}$.

Apply the same numeration to the values of the discrete map f, i.e., put $p_{ijl} = f(x_{ijl})$ for $i,j,l=0,1$.

Define the map F inside the rectangular parallelepiped $\Pi$, $y^n = F^n(x^1, x^2, x^3) = p^n_{000} + r^n_1 \Delta x^1 + r^n_2 \Delta x^2 + r^n_3 \Delta x^3$, where $n$, $n=1,2,3$, is the number of component of the map $F$ in three-dimensional color space $R^3$ and $\Delta x^i = (x^i - x^i_0) / (x^i_1 - x^i_0)$ for $i=1,2,3$. The coefficients $r^n_i$, $i=1,2,3$, are determined in correspondence with the following table

| No | Conditions | $r^n_1$ | $r^n_2$ | $r^n_3$ |
|----|------------|---------|---------|---------|
| 1 | $\Delta x^1 \geq \Delta x^2 \geq \Delta x^3$ | $p^n_{100} - p^n_{000}$ | $p^n_{110} - p^n_{100}$ | $p^n_{111} - p^n_{110}$ |
| 2 | $\Delta x^1 \geq \Delta x^3 \geq \Delta x^2$ | $p^n_{100}\, P^n_{000}$ | $p^n_{111} - p^n_{101}$ | $p^n_{101} - p^n_{100}$ |
| 3 | $\Delta x^3 \geq \Delta x^1 \geq \Delta x^2$ | $p^n_{101} - p^n_{001}$ | $p^n_{111} - p^n_{101}$ | $p^n_{001} - p^n_{000}$ |
| 4 | $\Delta x^2 \geq \Delta x^1 \geq \Delta x^3$ | $p^n_{110} - p^n_{010}$ | $p^n_{010} - p^n_{000}$ | $p^n_{111} - p^n_{110}$ |
| 5 | $\Delta x^2 \geq \Delta x^3 \geq \Delta x^1$ | $p^n_{111} - p^n_{011}$ | $p^n_{010} - p^n_{000}$ | $p^n_{011} - p^n_{010}$ |
| 6 | $\Delta x^3 \geq \Delta x^2 \geq \Delta x^1$ | $p^n_{111} - p^n_{011}$ | $p^n_{011} - p^n_{001}$ | $p^n_{001} - p^n_{000}$ |

The interpolation under consideration has a pure geometrical sense. We decompose a three-dimensional rectangular parallelepiped into six tetrahedrons. These tetrahedrons are defined by the conditions in the second column of the table above. Inside each tetrahedron the map $F$ is constructed by linear interpolation of the values $p_{ijl}$, $i,j,l=0,1$, of the discrete map f at the vertices to the tetrahedrons.

While this mathematical description has been given for the case of a three-colorant process, it is easily extended by the person skilled in the art for a process having any number of colorants.

device model inversion

An output device model enables to predict in what color vector the rendering of a colorant vector results. In this document, *model inversion* shall refer to the process of inverting an output device model so that colorant vectors can be predicted that, when rendered, yield a given preset color vector. The principles of inverting an output device model based are explained in the previously cited documents on this subject.

forward and inverse look-up tables

A color image can comprise millions of pixels. For converting between the color and colorant vectors of these pixels, preferably a look up table in combination with an efficient interpolation algorithm is used, because this approach is computationally more efficient that an evaluation pixel-by-pixel of an output device model and/or model inversion.

In this document a forward look-up table comprises colorant vectors as the entries and color vectors as data points. A forward look up table is populated by evaluating an output device model for its entries.

Similarly, an inverse look up table comprises color vectors as the entries and colorant vectors as data points. An inverse look up table is populated by evaluating the inverse output device model.

In this document forward look up tables are also referred to as color tables, whereas inverse look up tables are also referred to as color separation tables.

embodiment

A preferred method according to the current invention comprises the following steps.

In a first step an output device is optionally calibrated. Said calibration is preferably achieved by linearizing for each colorant either the CIE L* value, or the CIE a* value or CIE b* value as a function of the colorant magnitude using one of the prior art techniques that were previously mentioned. For a cyan, magenta or black colorant, the calibration preferably linearizes the CIE L* gradation. For a yellow or orange colorant, the calibration preferably linearizes the CIE b* gradation.

In a next step, an output device target such as in Figure 7 comprising a first set of patches 701 and a second set of patches 702 is printed with said optionally calibrated output device and the at least two color components of the patches of said target are measured. Preferably said printer target comprises combinations of a first set of colorant magnitudes forming an ordered grid of colorant vectors in colorant space.

The measured data of said second set 702 of patches can be used to determine the coefficients of an output device model. The output device model preferably uses piecewise linear interpolation as for example in the localized Neugebauer equations or on tetrahedral interpolation that were previously mentioned.

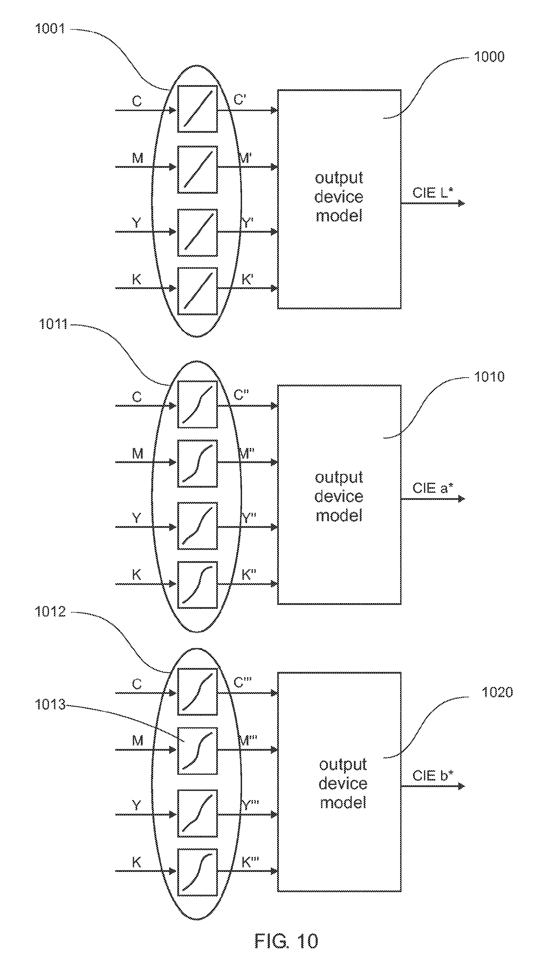

Referring to Figure 9 an output device model transforms a colorant vector having for example CMYK components into a color vector having for example CIE L*a*b* color components. According to one aspect of the invention said color vector comprises at least two and preferably three color components.

Referring to Figure 10, an output device model can be broken up into at least two partial output device models 1000, 1010 and 1020, whereby each partial output device model transforms the components of a colorant vector into one component of a color vector. According to one aspect of the invention, before the colorant components are transformed into a color component, they are transformed by sets of one-dimensional transformations 1001, 1011 and 1012, whereby each set of one-dimensional transformations corresponds with a partial output device model.

According to the invention, the one-dimensional sets of transformations 1001, 1011 and 1012 are selected so that the gradation of a color component as a function a colorant is piecewise linear for each of said partial output device models.

In this document, a piecewise linear gradation shall include variations of up to 5% of the dynamic range of the entity that changes in response to a colorant magnitude variation.

Also, piecewise linearity in this document is preferably considered for a color component variation in response to a variation of a single colorant. For example if a CIE b* color component varies piecewise linear as a function of a magenta colorant magnitude, it is assumed that other colorants that are part of the same output process, for example, cyan, yellow and black colorants have fixed - preferably zero - magnitudes.

Also, piecewise linearity preferably refers to linearity between the grid points of an output device target. For example, referring to the colorant grid 702 in Figure 7, piecewise linearity preferably means linearity in the intervals [0%, 10%], [10%,20%], [20%,40%], [40%,70%] and [70%,100%]

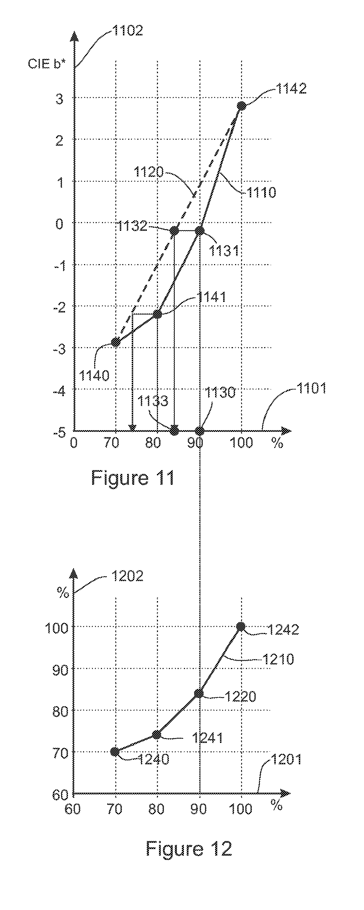

One method to select a one-dimensional transformation according to the current invention is explained by means of Figure 11 to Figure 13 that serve as an example that can be generalized by a person skilled in the art.

In Figure 11, the curve 1110 indicates the measured CIE b* color component as a function of a specified magenta colorant magnitude in a range from 70% to 100%.

The measurements 1140 and 1142 correspond to magenta colorant magnitudes that are specified in the set 702 (Figure 7) of an output device target. They are grid points of the printer model and act as vertices of a polyhedron for the purpose of interpolation.

The measurements 1141 and 1131 correspond to magenta colorant magnitudes that are specified in the set 701 (Figure 7) corresponding to a step wedge of an output device target.

The curve 1120 indicates a reference curve. According to one aspect of the current invention the reference curve is preferably locally linear between the grid points 1140 and 1142.

Referring to Figure 12, the curve 1210 maps an untransformed magenta colorant magnitude 1201 onto a transformed magenta colorant magnitude 1202 using a one-dimensional transformation.

A point 1220 of said one-dimensional transformation 1210 is obtained by:

- mapping the abscissa 1130 corresponding to a point 1220 of the transformation parallel to the ordinate axis 1102 onto the measured response curve to obtain a measured color component 1131;
- mapping said measured color component 1131 parallel to the abscissa axis 1101 onto said reference curve 1120 to obtain a reference response 1132;
- mapping said reference response parallel to the ordinate axis 1102 onto the abscissa axis 1101 to obtain a ordinate value for a point 1220 of the one-dimensional transformation.

By repeating the above procedure for all the colorant magnitudes of the set 701 (Figure 7) between the points 1140 and 1142, a one dimensional transformation curve 1210 is obtained between the points 1240 and 1242.

Referring to Figure 10, said one-dimensional transformation curve 1210 can be used in a transformation stage 1013.

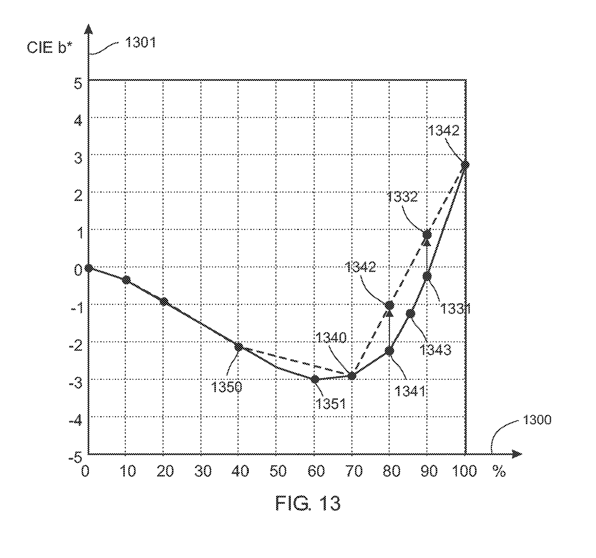

Referring to Figure 13, the effect of the calibration is that for colorant magnitudes between 70 and 100%, the original measured CIE b* components 1341 and 1331 are mapped onto the transformed CIE b* magnitudes 1342 and 1332. Since these magnitudes fall on a straight line segment between the CIE b* magnitudes 1340 and 1342, interpolation error from piecewise linear interpolation between the CIE b* magnitudes 1340 and 1342 for varying magenta colorant magnitudes is greatly reduced.

Referring to Figure 13, the same principles can be used to reduce the interpolation error of the CIE b* color component for variations of the magenta colorant between 0% and 10%, between 10% and 20%, between 20% and 40% and between 40% and 70%. In short, the interpolation error of the CIE b* color component for variations of the magenta colorant can be reduced over its complete range from 0% to 100%.

The method that was just explained requires that within a piecewise interpolation interval between the grid points 1140 and 1142 (Figure 11) the measured color component response curve 1110 is monotonous. If this condition is not met, the step of mapping a measured color component onto a reference color component does not yield a unique result and the method breaks up. Such a situation occurs for example between the grid points 1350 and 1340 in Figure 13. In that case one or more measured color component responses can be omitted to restore monotonousness. For example by omitting the measured point 1351 the measured color component response curve between the points 1350 and 1340 becomes monotonous again.

According to the current invention, piecewise linearity is only evaluated for colorant vectors that have been included for processing in the method for obtaining a one dimensional transformation according to the current invention.

Referring to Figure 13, for example, piecewise linearity is only evaluated for the points 1340, 1341, 1331, 1342, but not for the point 1343, as the latter point was not included for processing in the method according to the invention. Similarly, piecewise linearity is not evaluated for the point 1351, as this point was also not included for processing.

The method that was just explained for reducing the interpolation error of a CIE b* color component can just as well be used to reduce the interpolation error of the CIE L* and CIE a* color components for variations of the magenta colorant over its range from 0% to 100%.

Similarly, the same principles can be used to reduce the interpolation error of the CIE L*a*b* color components for variations of the other colorants.

In general, an output device model that transforms n (n>=1) colorants into m (m>=2) color components shall include n*m one-dimensional transformations so that any of the m color components varies a linear function of any of the m colorants.

The method according to the current invention is preferably carried out on a data processing system such as a computer. A computer preferably comprises a network connection means, a central processing unit and memory means which are all connected through a computer bus. The computer typically also has a computer human interface for inputting data and a computer human interface for outputting data. According to one embodiment, the computer program code is stored on a computer readable medium such as a mass storage device or a portable data carrier which is read by means of a portable data carrier reading means.

Having described in detail preferred embodiments of the current invention, it will now be apparent to those skilled in the art that numerous modifications can be made therein without departing from the scope of the invention as defined in the appending claims.

**Claims**

1. A method for transforming a colorant vector having at least one colorant component into a color vector having at least two color components, the method comprising the steps of: |

   - applying one-dimensional transformations (1001, 1011, 1012, 1013) on said colorant components to obtain transformed colorant components;
   - using an output device model (1000, 1010, 1020) for transforming said colorant components into color components; the method being **characterized in that**:

      - said one-dimensional transformations are selected so that each color component varies piecewise linearly (403) as a function of a colorant component.

2. A method according to claim 1, wherein said output device model comprises a look up table comprising grid points corresponding to an output device target and an interpolator.

3. A method according to anyone of the claims, further including a model inversion step.

4. A method according to the previous claim, further including a printing step.

5. A system for transforming a set of m (m>=1) colorant components into a set of n (n>=2) color components, the system comprising:

- n sets (1001, 1011, 1012) of m one-dimensional transformations for transforming colorant magnitudes into transformed colorant magnitudes;
- n means (1000, 1010, 1020) for m-dimensional interpolation; the system being **characterized in that**:

- said n sets of m-dimensional transformations are selected so that said m color components vary piecewise linearly in response to variations of said n colorants.

6. A data processing system comprising means for carrying out the steps of the method according to any one of the claims 1 to 4.

7. A computer program comprising computer program code means adapted to perform the method according to any one of the claims 1 to 4, when said program is executed on a computer.

8. A computer readable medium comprising program code adapted to carry out the method according to any one of the claims 1 to 4, when executed on a computer.

**Amended claims in accordance with Rule 86(2) EPC.**

1. A method for transforming a colorant vector comprising at least one colorant component (1040) into a color vector having at least two color components (1001, 1002) using an output device model that comprises for each color component a partial output device model (1000, 1010), the method comprising the steps of:

- applying a first one-dimensional transformation (1043) on said colorant component (1040) to obtain a first transformed colorant component (1041);
- using a first partial output device model (1000) for transforming said transformed colorant component (1041) into a first color component (1001);
- applying a second one-dimensional transformation (1044) on said colorant component (1040) to obtain a second transformed colorant component (1042);
- using a second partial output device model (1010) for transforming said transformed colorant component (1042) into a second color component (1002);
the method being **characterized in that**:
- said first (1001) and said second (1011) one-dimensional transformations are different.

2. A method according to claim 1, wherein said first and said second one-dimensional transformations are selected so that both said first color component (1001) and said second color component (1002) vary piecewise linearly (403) as a function of said colorant component (1040).

3. A method according to claim 1, wherein each partial output device model comprises a look up table comprising grid points corresponding to an output device target and an interpolator.

4. A method according to anyone of the claims 1 to 3, further including a model inversion step.

5. A method according to the previous claim, further including a printing step.

6. A system for transforming at least one colorant component (1040) into a color vector comprising at least two color components (1001, 1002) using an output device model that comprises for each color component (1001, 1002) a partial output device model (1000, 1010), the system comprising:

- a first one-dimensional transformation for transforming said colorant magnitude (1040) into a first transformed colorant magnitude (1041);
- a first partial output device model for transforming said first transformed colorant (1041) into said first color component (1001);
- a second one-dimensional transformation for transforming said colorant magnitude (1040) into a second transformed colorant magnitude (1042);
- a second partial output device model for transforming said second transformed colorant (1042) into said second color component (1002);
the system being **characterized in that**:
- said first and second one-dimensional transformations are different.

**7.** A system according to the previous claim, wherein said first and second one-dimensional transformations are selected so that both said first color component (1001) and said second color component (1002) vary piecewise linearly (403) as a function of said colorant component (1040).

**8.** A system according to anyone of the claims 6 or 7, wherein said partial output device model comprises a tetrahedral interpolator.

**9.** A data processing system comprising means for carrying out the steps of the method according to any one of the claims 1 to 4.

**10.** A computer program comprising computer program code means adapted to perform the method according to any one of the claims 1 to 4, when said program is executed on a computer.

**11.** A computer readable medium comprising program code adapted to carry out the method according to any one of the claims 1 to 4, when executed on a computer.

FIG. 2

FIG. 1

FIG. 3

FIG. 4

FIG. 5

FIG. 6

FIG. 7

FIG. 9

Figure 8-A

Figure 8-B

Figure 8-C

Figure 8-D

Figure 8-E

Figure 8-F

Figure 8-G

Figure 8-H

FIG. 10

Figure 11

Figure 12

FIG. 13

**European Patent Office**

**EUROPEAN SEARCH REPORT**

Application Number

EP 06 11 0556

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 343 309 A (AGFA-GEVAERT) 10 September 2003 (2003-09-10) * abstract * * paragraphs [0013], [0029], [0066], [0067]; figure 5 * | 1-8 | INV. H04N1/60 |
| Y | EP 1 353 497 A (AGFA-GEVAERT) 15 October 2003 (2003-10-15) * abstract * * paragraphs [0021], [0027] * | 1-8 | |
| Y | EP 1 083 739 A (AGFA-GEVAERT; AGFA-GEVAERT NAAMLOZE VENNOOTSCHAP) 14 March 2001 (2001-03-14) * abstract * * the whole document * | 1-8 | |
| Y | US 5 978 107 A (MURAI ET AL) 2 November 1999 (1999-11-02) * abstract * * column 2, line 35 - line 38 * * column 18, line 52 - column 20, line 17 * | 1-8 | |
| Y | EP 0 944 244 A (XEROX CORPORATION) 22 September 1999 (1999-09-22) * abstract * * paragraphs [0005], [0011], [0012], [0022], [0029] * | 1-8 | TECHNICAL FIELDS SEARCHED (IPC)  H04N |

The present search report has been drawn up for all claims

| Place of search | Date of completion of the search | Examiner |
|---|---|---|
| The Hague | 12 September 2006 | Winne, Dominique |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 11 0556

This annex lists the patent family members relating to the patent documents cited in the above-mentioned European search report.
The members are as contained in the European Patent Office EDP file on
The European Patent Office is in no way liable for these particulars which are merely given for the purpose of information.

12-09-2006

| Patent document cited in search report | | Publication date | Patent family member(s) | | Publication date |
|---|---|---|---|---|---|
| EP 1343309 | A | 10-09-2003 | EP | 1083739 A2 | 14-03-2001 |
| | | | EP | 1341371 A2 | 03-09-2003 |
| | | | EP | 1351483 A2 | 08-10-2003 |
| EP 1353497 | A | 15-10-2003 | NONE | | |
| EP 1083739 | A | 14-03-2001 | EP | 1341371 A2 | 03-09-2003 |
| | | | EP | 1351483 A2 | 08-10-2003 |
| | | | EP | 1343309 A2 | 10-09-2003 |
| US 5978107 | A | 02-11-1999 | JP | 3083067 B2 | 04-09-2000 |
| | | | JP | 8102865 A | 16-04-1996 |
| EP 0944244 | A | 22-09-1999 | JP | 11298749 A | 29-10-1999 |
| | | | US | 6075886 A | 13-06-2000 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1083739 A
- EP 1146726 A
- EP 0639023 B

**Non-patent literature cited in the description**

- **FRANCIS SCHMITT ; JON YNGVE HARDEBERG.** Color Printer Characterization Using a Computational Geometry Approach. *Proceedings of IS&T and SID's 5th Color Imaging Conference,* November 1997, 96-99
- Color Science: concepts and methods, quantitative data and formulae. Wiley, 1982
- **MARC MAHY ; PAUL DELABASTITA.** Inversion of the Neugebauer Equations. *Color Research and Application,* vol. 21 (6), 404-411